# EUROPEAN PATENT SPECIFICATION

(11) **EP 3 100 638 B1**
(45) Date of publication and mention of the grant of the patent: **27.11.2019**
(21) Application number: 15002413.1
(22) Date of filing: 13.08.2015
(51) Int. Cl.: H04M 1/04, H04M 1/18, A45F 5/00, G06F 1/16, H04B 1/3888

(54) **PROTECTIVE CASE**
SCHUTZGEHÄUSE
BOÎTIER DE PROTECTION

(30) Priority: 01.06.2015 TW 104208659
(43) Date of publication of application: 07.12.2016
(73) Proprietor: Flytech Technology Co., Ltd., Taipei City 114 (TW)
(72) Inventor: Lin, Chiung-Chi, 114 Taipei City (TW); Chiang, Chih-Kuang, 114 Taipei City (TW); Chen, Ping-Chou, 114 Taipei City (TW); Yang, Hsun-Chang, 114 Taipei City (TW); Yeh, Li-Wen, 114 Taipei City (TW); Chan, Sung-Lin, 114 Taipei City (TW)
(74) Representative: Zeitler Volpert Kandlbinder Patent- und Rechtsanwälte Partnerschaft mbB

(56) References cited:
- WO-A1-2014/174319
- US-A1- 2014 054 909
- US-A1- 2014 160 676

## Description

### FIELD OF THE INVENTION

The present invention relates to a protective case, and more particularly to a protective case with a fixing strap.

### BACKGROUND OF THE INVENTION

Generally, portable electronic devices such as mobile phones or tablet computers are not equipped with keyboards. Consequently, the size and weight of the portable electronic device can meet the requirement of most users. That is, the portable electronic devices can be carried and used more easily. During the commute time or in many different circumstances, the users can operate the portable electronic devices. For holding and operating the portable electronic device simultaneously, the user usually holds the portable electronic device with one hand and operates the portable electronic device with the other hand. Since the portable electronic device is held with the single hand, the portable electronic device possibly falls down from the hand. Since the portable electronic device is knocked or collided by the floor, the possibility of causing damage or breakdown of the portable electronic device increases. Therefore, the manufacturers make efforts in providing a portable electronic device that can be simultaneously held and operated by the user in a convenient manner.

In accordance with a widely-used approach, a protective case of the portable electronic device is equipped with a fixing strap for holding the hand of the user. By means of the fixing strap, the possibility of falling down the portable electronic device will be minimized. Some conventional technologies using the fixing strap will be illustrated as follows.

For example, Taiwanese Patent No. I439217 discloses a portable electronic device with a fixing strap. In Taiwanese Patent No. I439217, two ends of the fixing strap are connected with two positions of a circular rotatory disc having a central hollow portion. The rotatory disc is installed on a backside surface of a tablet computer. After a hand of the user is inserted into the space under the fixing strap and the hand is held between the backside surface of the tablet computer and the fixing strap, the tablet computer will not be detached from the hand of the user. However, since the rotatory disc and the fixing strap are protruded from a surface of the tablet computer, the tablet computer is not aesthetically pleasing and the tablet computer is stored with difficulty.

Furthermore, US Patent No. 8550317 also discloses a protective case with a fixing strap. In US Patent No. 8550317, the protective case has a circular opening. The two ends of the fixing strap are accommodated within the protective case. A middle segment of the fixing strap is penetrated through the circular opening so as to be pulled in the direction away from the protective case. However, since the length of the fixing strap pulled out from the circular opening is constant, the fixing strap is too short or too long for different users. That is, the fixing strap cannot be used for various sizes of hands. Moreover, since the fixing strap cannot be automatically retracted back when the fixing strap is not used, the fixing strap is not user-friendly.

Furthermore, US Patent Publication No. 20110309117 discloses a protective case of a portable electronic device with a fixing strap. In US Patent Publication No. 20110309117, the two ends of the fixing strap are inserted into the protective case, and a portion of the fixing strap is exposed outside the protective case. Moreover, a tail end of the fixing strap comprises plural ridges, and plural grooves are formed in an inner surface of the protective case. When the portion of the fixing strap exposed outside the protective case is pulled, the engagement through the plural ridges and the corresponding grooves can achieve the positioning purpose. Consequently, the length of the portion of the fixing strap exposed outside the protective case is adjustable. That is, the length of the portion of the fixing strap exposed outside the protective case can be adjusted through the plural ridges and the plural grooves. However, since the numbers and positions of the plural ridges and the plural grooves are fixed, the fixing strap cannot be used for various sizes of hands. Similarly, the fixing strap cannot be automatically retracted back when the fixing strap is not used.

US Patent Publication No. 2014/0054909 discloses an electronics device hand grip that comprises a handle member, which cooperates with a backing to effectively provide a loop or sleeve over the user's hand. Even if the handle member itself may be size adjustable, and may automatically return to a substantially flat position when the handle member is not in use, the whole handle member still protrudes from the backing as the handle member is received, with its anchors, by two moorings projecting from the back surface of the backing. Therefore, the electronics device hand grip is relatively bulky and has a redundant room when it is not in use. From the above discussions, the conventional fixing strap adversely affects the aesthetically-pleasing efficacy of the portable electronic device and the protective case and is not suitably used for various sizes of hands.

Therefore, there is a need of providing an improved protective case with a fixing strap in order to overcome the above drawbacks.

### SUMMARY OF THE INVENTION

The present invention provides a protective case as defined in claim 1, with a fixing strap that is aesthetically pleasing and suitably used for various sizes of hands. Preferred features of the invention are set out in the dependent claims.

In accordance with an aspect of the present invention, there is provided a protective case. The protective case includes a main body and a fixing strap. An electronic device is installed on the main body. The fixing strap is disposed on the main body for holding an object between the fixing strap and the main body. The fixing strap includes a first elastic part, a second elastic part and a connecting part. The first elastic part is connected with an inner surface of the main body, and includes at least one first opening. An elastic force of the first elastic part is adjustable through the at least one first opening. The second elastic part is connected with the inner surface of the main body, and includes at least one second opening. An elastic force of the second elastic part is adjustable through the at least one second opening. The connecting part is arranged between the first elastic part and the second elastic part and connected with the first elastic part and the second elastic part. When the connecting part is not pulled, the connecting part is accommodated within a hollow portion of the main body and exposed to an outer surface of the main body, and the connecting part is coplanar with the outer surface of the main body. When the connecting part is pulled, the first elastic part and the second elastic part are stretched and subjected to deformation, so that the object is held between the connecting part and the main body. The main body further includes a stopping plate under the hollow portion. Moreover, two parallel rims of the stopping plate are connected with two corresponding parallel rims of the hollow portion, and two connection holes are respectively located at two opposite sides of the stopping plate.

In an embodiment, the at least one first opening and the at least one second opening have the same number and the same shape.

In an embodiment, the at least one first opening and the at least one second opening are circular or oblong.

In an embodiment, the connecting part is made of a non-elastic material, and the first elastic part and the second elastic part are made of silicon resin.

In an embodiment, the first elastic part and the second elastic part are introduced into the main body through the corresponding connection holes.

In an embodiment, the main body further includes at least one first locking slot, and the first elastic part includes at least one first bulge. The at least one first locking slot is located at a first lateral side of the inner surface of the main body. The at least one first bulge is locked into the at least one first locking slot and fixed at the first lateral side of the main body.

In an embodiment, the main body further includes at least one second locking slot, and the second elastic part includes at least one second bulge. The at least one second locking slot is located at a second lateral side of the inner surface of the main body. The at least one second bulge is locked into the at least one second locking slot and fixed at the second lateral side of the main body.

In an embodiment, the connecting part includes at least one first connecting groove, and the first elastic part includes at least one first connecting block locked into the at least one first connecting groove.

In an embodiment, the connecting part includes at least one second connecting groove, and the second elastic part includes at least one second connecting block locked into the at least one second connecting groove.

In an embodiment, two ends of the first elastic part and two ends of the second elastic part are attached on the connecting part and the inner surface of the main body via an adhesive.

In an embodiment, the protective case further includes a covering plate. The covering plate is coupled with the inner surface of the main body.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic exploded view illustrating a protective case according to an embodiment of the present invention;
FIG. 2 is a schematic perspective view illustrating the main body of the protective case according to the embodiment of the present invention, which is taken from an inside viewpoint;
FIG. 3 is a schematic perspective view illustrating the main body of the protective case according to the embodiment of the present invention, which is taken from an outside viewpoint;
FIG. 4 is a schematic perspective view illustrating the fixing strap of the protective case according to the embodiment of the present invention, which is taken along an inside viewpoint;
FIG. 5 is a schematic exploded view illustrating the fixing strap of the protective case as shown in FIG. 5;
FIG. 6 is a schematic perspective view illustrating the fixing strap of the protective case according to the embodiment of the present invention, which is taken along an outside viewpoint;
FIG. 7 is a schematic perspective view illustrating the combination of the main body and the fixing strap of the protective case according to the embodiment of the present invention, which is taken along an inside viewpoint;
FIG. 8 is a schematic perspective view illustrating the combination of the main body and the fixing strap of the protective case according to the embodiment of the present invention, which is taken along an outside viewpoint; and
FIG. 9 is a schematic perspective view illustrating the protective case according to the embodiment of the present invention in a usage status.

### DETAILED DESCRIPTION OF THE PREFERRED EMBODIMENT

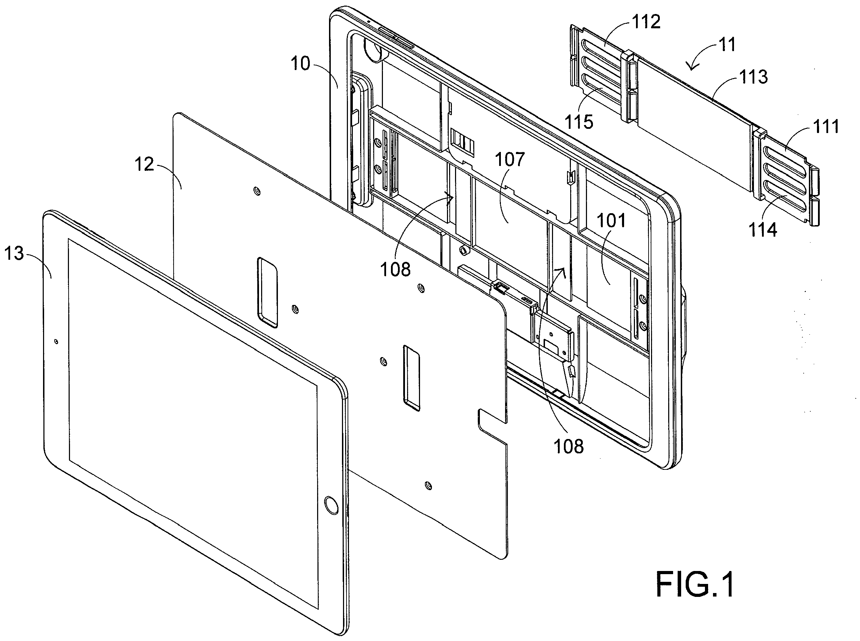

The present invention provides a protective case. FIG. 1 is a schematic exploded view illustrating a protective case according to an embodiment of the present invention. As shown in FIG. 1, the protective case 1 comprises a main body 10, a fixing strap 11 and a covering plate 12. After the main body 10 and the fixing strap 11 are combined together and the covering plate 12 is coupled with an inner surface 101 of the main body 10, an electronic device 13 can be installed on the main body 10. Consequently, the electronic device 13 can be protected by the protective case 1. The structures of the main body 10 and the fixing strap 11 and the sequence of assembling the main body 10 and the fixing strap 11 will be illustrated as follows.

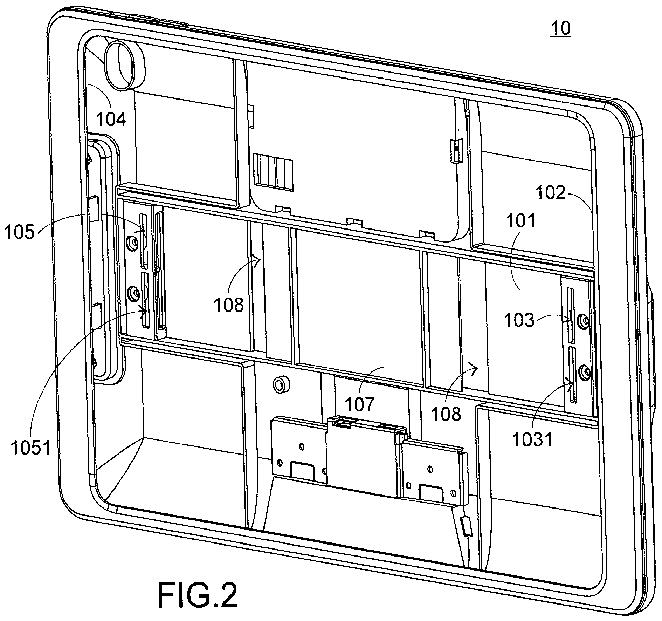

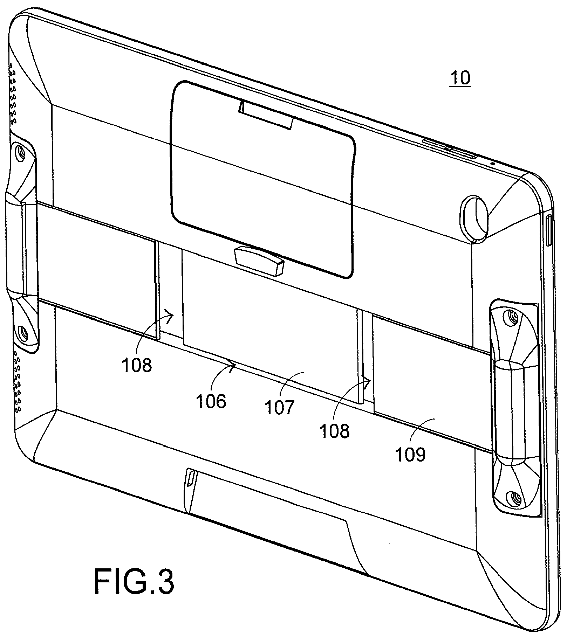

First of all, the structures of the main body 10 and the fixing strap 11 will be illustrated with reference to FIGS. 2 and 3. FIG. 2 is a schematic perspective view illustrating the main body of the protective case according to the embodiment of the present invention, which is taken from an inside viewpoint. FIG. 3 is a schematic perspective view illustrating the main body of the protective case according to the embodiment of the present invention, which is taken from an outside viewpoint. As shown in FIG. 2, a first locking slot 103 is located at a first lateral side 102 of the inner surface 101 of the main body 10, and a second locking slot 105 is located at a second lateral side 104 of the inner surface 101 of the main body 10. As shown in FIG. 3, the main body 10 further comprises a rectangular hollow portion 106, and a stopping plate 107 is disposed under the hollow portion 106. Moreover, two parallel rims of the stopping plate 107 are connected with two corresponding parallel rims of the hollow portion 106. As shown in FIGS. 2 and 3, two connection holes 108 are respectively located at two opposite sides of the stopping plate 107. The two connection holes 108 run through the inner side and the outer side of the main body 10. In an embodiment, the first locking slot 103 and the second locking slot 105 are integrally formed with the main body 10. In another embodiment, the first locking slot 103 and the second locking slot 105 are individual components that can be easily replaced by the user.

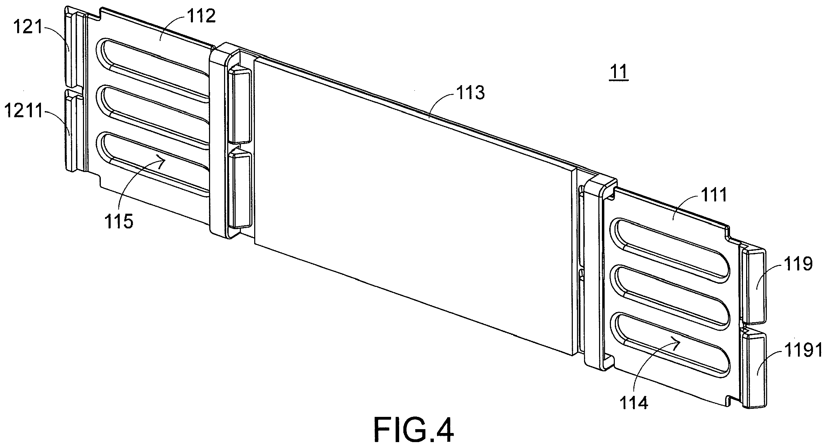

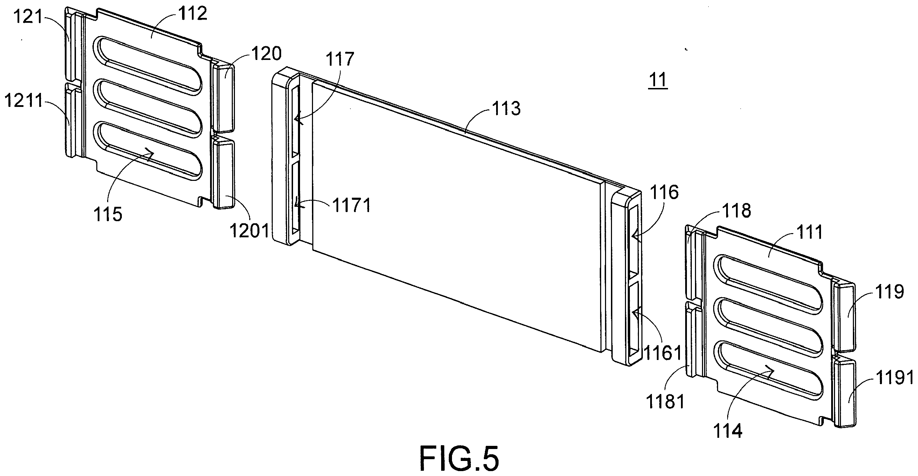

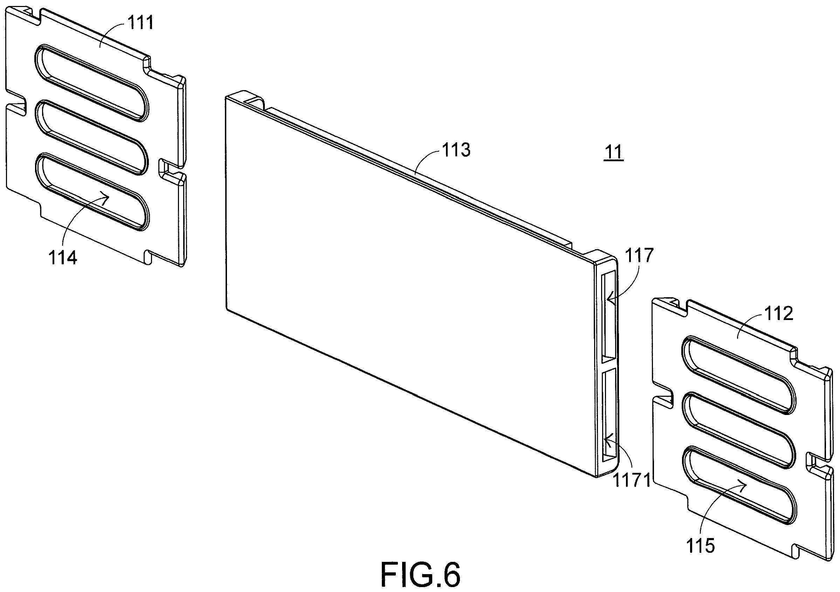

Next, please refer to FIGS. 4, 5 and 6. FIG. 4 is a schematic perspective view illustrating the fixing strap of the protective case according to the embodiment of the present invention, which is taken along an inside viewpoint. FIG. 5 is a schematic exploded view illustrating the fixing strap of the protective case as shown in FIG. 5. FIG. 6 is a schematic perspective view illustrating the fixing strap of the protective case according to the embodiment of the present invention, which is taken along an outside viewpoint.

As shown in FIGS. 5 and 6, the fixing strap 11 comprises a first elastic part 111, a second elastic part 112 and a connecting part 113. The first elastic part 111 comprises plural openings 114. The second elastic part 112 comprises plural openings 115. By means of the plural openings 114 and the plural openings 115, the elastic forces of the first elastic part 111 and the second elastic part 112 are adjustable. It is noted that the numbers and shapes of the plural openings 114 and the plural openings 115 are not restricted. That is, the numbers and shapes of the plural openings 114 and the plural openings 115 may be varied according to the required elastic forces of the first elastic part 111 and the second elastic part 112. In this embodiment, the plural openings 114 include three oblong openings, and the plural openings 115 also include three oblong openings. According to the practical requirements, the shapes of the openings may be changed (e.g., circular openings). Regardless of how the shapes of the openings are changed, the number and shape of the plural openings 114 are identical to the number and shape of the plural openings 115. Consequently, the elastic forces of the first elastic part 111 and the second elastic part 112 are identical. More preferably, the connecting part 113 is made of a non-elastic material. Preferably but not exclusively, the first elastic part 111 and the second elastic part 112 are made of silicon resin.

The connecting part 113 comprises two first connecting grooves 116, 1161 and two second connecting grooves 117, 1171. The first connecting grooves 116 and 1161 are located at a first end of the connecting part 113. The second connecting grooves 117 and 1171 are located at a second end of the connecting part 113. The first elastic part 111 comprises two first connecting blocks 118, 1181 and two first bulges 119, 1191. The first connecting blocks 118 and 1181 are located at a first end of the elastic part 111. The first bulges 119 and 1191 are located at a second end of the elastic part 111. The second elastic part 112 comprises two second connecting blocks 120, 1201 and two second bulges 121, 1211. The second connecting blocks 120 and 1201 are located at a first end of the second elastic part 112. The second bulges 121 and 1211 are located at a second end of the second elastic part 112. The first connecting blocks 118 and 1181 are locked into the corresponding first connecting grooves 116 and 1161. The second connecting blocks 120 and 1201 are locked into the corresponding second connecting grooves 117 and 1171. Consequently, the first elastic part 111 and the second elastic part 112 are respectively connected with the first end and the second end of the connecting part 113.

In an embodiment, the first connecting grooves 116, 1161 and the second connecting grooves 117, 1171 are integrally formed with the connecting part 113. In another embodiment, the first connecting grooves 116, 1161 and the second connecting grooves 117, 1171 are individual components that can be easily replaced by the user. In an embodiment, the first connecting blocks 118, 1181 and the first bulges 119, 1191 are integrally formed with the first elastic part 111. In another embodiment, the first connecting blocks 118, 1181 and the first bulges 119, 1191 are individual components. In an embodiment, the second connecting blocks 120, 1201 and the second bulges 121, 1211 are integrally formed with the second elastic part 112. In another embodiment, the second connecting blocks 120, 1201 and the second bulges 121, 1211 are individual components.

In the above embodiment, the fixing strap 11 comprises two first connecting grooves, two second connecting grooves, two first connecting blocks and two second connecting blocks. It is noted that the numbers of the connecting grooves and the connecting blocks are not restricted to those shown in the drawings. For example, in another embodiment, a single connecting groove is connected with a single connecting block or plural connecting blocks. Alternatively, in a further embodiment, each elastic part has a single connecting block.

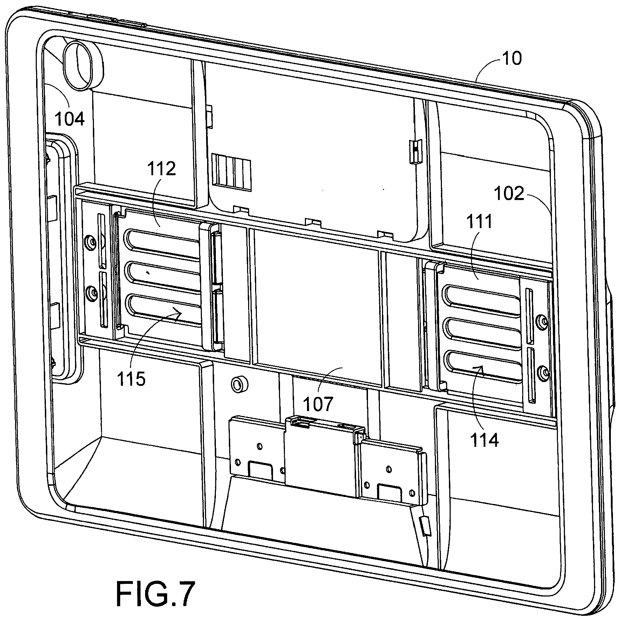

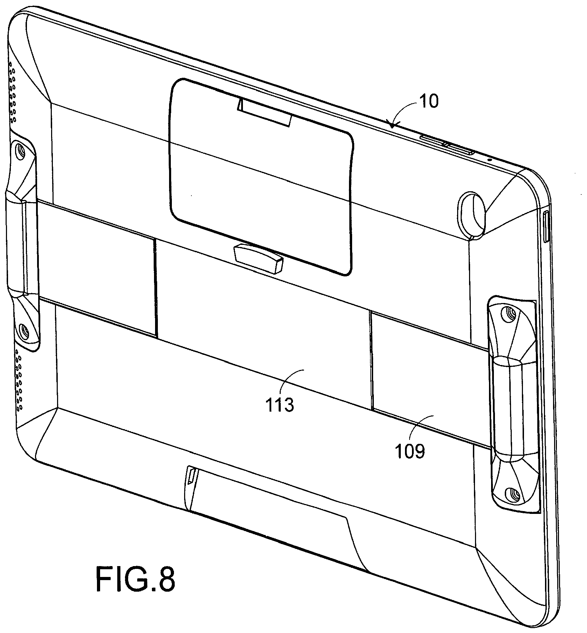

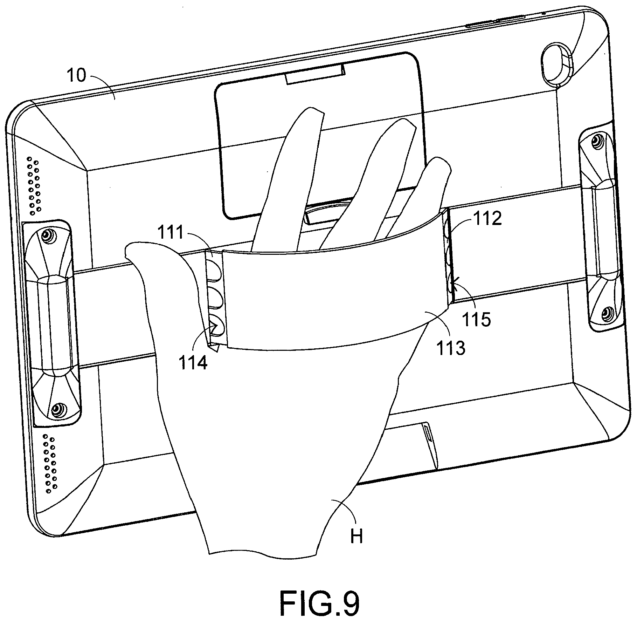

Hereinafter, the sequence of assembling the main body 10 and the fixing strap 11 will be illustrated with reference to FIGS. 2, 3, 4, 7, 8 and 9. FIG. 7 is a schematic perspective view illustrating the combination of the main body and the fixing strap of the protective case according to the embodiment of the present invention, which is taken along an inside viewpoint. FIG. 8 is a schematic perspective view illustrating the combination of the main body and the fixing strap of the protective case according to the embodiment of the present invention, which is taken along an outside viewpoint. FIG. 9 is a schematic perspective view illustrating the protective case according to the embodiment of the present invention in a usage status.

As mentioned above, the main body 10 further comprises the hollow portion 106. In the assembling process, the connecting part 113 is disposed within the hollow portion 106, and the connecting part 113 is contacted with the stopping plate 107 so as to be positioned. Moreover, after the connecting part 113 is embedded within the hollow portion 106, the connecting part 113 is substantially coplanar with an outer surface 109 of the main body 10 (see FIG. 8).

The first elastic part 111 and the second elastic part 112 are introduced into the main body 10 through the two connection holes 108 at the two opposite sides of the stopping plate 107. Moreover, the first bulges 119 and 1191 of the first elastic part 111 are respectively locked into the first locking slots 103 and 1031 at the first lateral side 102 of the inner surface 101 of the main body 10. The second bulges 121 and 1211 of the second elastic part 112 are respectively locked into the second locking slots 105 and 1051 at the second lateral side 104 of the inner surface 101 of the main body 10. Consequently, the first elastic part 111 and the second elastic part 112 are fixed and connected to the first lateral side 102 and the second lateral side 104 of the inner surface 101 of the main body 10, respectively.

In the above embodiment, the main body 10 comprises two first locking slots and two second locking slots, and the fixing strap 11 comprises two first bulges and two second bulges. It is noted that the numbers of the locking slots and the bulges are not restricted to those shown in the drawings. For example, in another embodiment, a single bulge or plural bulges are locked into the corresponding locking slot. Alternatively, in a further embodiment, each elastic part has a single bulge.

After the above steps are performed, the assembling process is completed. In case that the user's hand H is inserted into the space under the connecting part 113 and the connecting part 113 is pulled in the direction away from the main body 10, the first elastic part 111 and the second elastic part 112 are stretched by the connecting part 113 and subjected to deformation. Consequently, the user's hand H can be held between the connecting part 113 and the main body 10. Moreover, in response to the elastic forces of the first elastic part 111 and the second elastic part 112, the lengths of the first elastic part 111 and the second elastic part 112 can be automatically adjusted. Consequently, the first elastic part 111 and the second elastic part 112 can be stretched to the appropriate lengths according to the size of the user's hand H. Under this circumstance, the connecting part 113 is satisfactorily attached on the user's hand H. In other words, the fixing strap 11 is suitably used for various sizes of hands.

In case that the user's hand H is withdrawn from the space under the connecting part 113 and the connecting part 113 is no longer pulled, the first elastic part 111 and the second elastic part 112 are restored to their original shapes in response to the elastic forces thereof. As the first elastic part 111 and the second elastic part 112 are restored to their original shapes, the connecting part 113 is correspondingly embedded within the hollow portion 106 again.

It is noted that numerous modifications and alterations may be made while retaining the teachings of the invention. For example, in another embodiment, the two ends of the first elastic part 111 and the two ends of the second elastic part 112 are attached on the two ends of the connecting part 113 and the two lateral sides of the inner surface 101 of the main body 10 via solid or liquid adhesives. In case that the solid or liquid adhesives are employed, it is not necessary to form the first connecting blocks 118, 1181 and the first bulges 119, 1191 at the two ends of the first elastic part 111, and it is not necessary to form the second connecting blocks 120, 1201 and the second bulges 121, 1211 at the two ends of the second elastic part 112. Similarly, under this circumstance, it is not necessary to form the first connecting grooves 116, 1161 and the second connecting grooves 117, 1171 at the two ends of the connecting part 113, and it is not necessary to form the first locking slots 103, 1031 and the second locking slots 105 and 1051 at the two lateral sides of the inner surface 101 of the main body 10.

As mentioned above, the connecting part 113 is connected with the first elastic part 111 and the second elastic part 112, and the user's hand H is held between the connecting part 113 and the main body 10. Since the lengths of the first elastic part 111 and the second elastic part 112 can be automatically adjusted in response to the elastic forces of the first elastic part 111 and the second elastic part 112, the connecting part 113 can be satisfactorily attached on the user's hand and suitably used for various sizes of hands.

Moreover, the main body 10 further comprises the hollow portion 106, and the stopping plate 107 is disposed under the hollow portion 106. Consequently, in case that the connecting part 113 is not pulled, the connecting part 113 is embedded within the hollow portion 106 and not protruded over the outer surface 109 of the main body 10. Moreover, the connecting part 113 and the main body 10 are made of the same material or coated with the same paint. Consequently, the connecting part 113 and the main body 10 have the consistent properties, and the aesthetically-pleasing efficacy of the main body 10 is enhanced.

As mentioned above, the first elastic part 111 comprises the plural openings 114, and the second elastic part 112 comprises the plural openings 115. By means of the plural openings 114 and the plural openings 115, the elastic forces of the first elastic part 111 and the second elastic part 112 are adjustable. Consequently, during the process of assembling the protective case 1, it is not necessary to change the materials or sizes of the first elastic part 111 and the second elastic part 112 for adjusting the elastic forces, and it is not necessary to change the main body 10 in response to the changes of the sizes of the first elastic part 111 and the second elastic part 112. Under this circumstance, the complexity and cost of fabricating the protective case 1 are reduced.

From the above descriptions, the present invention provides a protective case with a fixing strap. The protective case with the fixing strap is aesthetically pleasing and suitably used for various sizes of hands. Moreover, the protective case has reduced fabricating complexity and reduced fabricating cost. Consequently, the problems of the conventional technologies can be effectively overcome.

While the invention has been described in terms of what is presently considered to be the most practical and preferred embodiments, it is to be understood that the invention needs not be limited to the disclosed embodiments. On the contrary, it is intended to cover various modifications and similar arrangements included within the scope of the appended claims which are to be accorded with the broadest interpretation so as to encompass all such modifications and similar structures.

## Claims

1. A protective case, comprising:
a main body (10), wherein an electronic device (13) is installed on the main body (10); and
a fixing strap (11) disposed on the main body (10) for holding an object between the fixing strap (11) and the main body (10),
said fixing strap (11) comprising:
a first elastic part (111) connected with an inner surface (101) of the main body (10), and comprising at least one first opening (114), wherein an elastic force of the first elastic part (111) is adjustable through the at least one first opening (114);
a second elastic part (112) connected with the inner surface (101) of the main body (10), and comprising at least one second opening (115), wherein an elastic force of the second elastic part (112) is adjustable through the at least one second opening (115); and
a connecting part (113) arranged between the first elastic part (111) and the second elastic part (112) and connected with the first elastic part (111) and the second elastic part (112),
wherein when the connecting part (113) is not pulled, the connecting part (113) is accommodated within a hollow portion (106) of the main body (10) and exposed to an outer surface (109) of the main body (10), and the connecting part (113) is coplanar with the outer surface (109) of the main body (10),
wherein when the connecting part (113) is pulled, the first elastic part (111) and the second elastic part (112) are stretched and subjected to deformation, so that the object is held between the connecting part (113) and the main body (10),
**characterized in that** the main body (10) further comprises a stopping plate (107) under the hollow portion (106), wherein two parallel rims of the stopping plate (107) are connected with two corresponding parallel rims of the hollow portion (106), and two connection holes (108) are respectively located at two opposite sides of the stopping plate (107).

2. The protective case according to claim 1, **characterized in that** the at least one first opening (114) and the at least one second opening (115) have the same number and the same shape.

3. The protective case according to claim 1, **characterized in that** the at least one first opening (114) and the at least one second opening (115) are circular or oblong.

4. The protective case according to claim 1, **characterized in that** the connecting part (113) is made of a non-elastic material, and the first elastic part (111) and the second elastic part (112) are made of silicon resin.

5. The protective case according to any one of the foregoing claims, **characterized in that** the first elastic part (111) and the second elastic part (112) are introduced into the main body (10) through the corresponding connection holes (108).

6. The protective case according to claim 1, **characterized in that** the main body (10) further comprises at least one first locking slot (103, 1031), and the first elastic part (111) comprises at least one first bulge (119, 1191), wherein the at least one first locking slot (103, 1031) is located at a first lateral side (102) of the inner surface (101) of the main body (10), and the at least one first bulge (119, 1191) is locked into the at least one first locking slot (103, 1031) and fixed at the first lateral side (102) of the main body (10).

7. The protective case according to claim 1, **characterized in that** the main body (10) further comprises at least one second locking slot (105, 1051), and the second elastic part (112) comprises at least one second bulge (121, 1211), wherein the at least one second locking slot (105, 1051) is located at a second lateral side (104) of the inner surface (101) of the main body (10), and the at least one second bulge (121, 1211) is locked into the at least one second locking slot (105, 1051) and fixed at the second lateral side (104) of the main body (10).

8. The protective case according to claim 1, **characterized in that** the connecting part (113) comprises at least one first connecting groove (116, 1161), and the first elastic part (111) comprises at least one first connecting block (118, 1181) locked into the at least one first connecting groove (116, 1161).

9. The protective case according to claim 1, **characterized in that** the connecting part (113) comprises at least one second connecting groove (117, 1171), and the second elastic part (112) comprises at least one second connecting block (120, 1201) locked into the at least one second connecting groove (117, 1171).

10. The protective case according to claim 1, **characterized in that** two ends of the first elastic part (111) and two ends of the second elastic part (112) are attached on the connecting part (113) and the inner surface (101) of the main body (10) via an adhesive.

11. The protective case according to claim 1, **characterized in** further comprising a covering plate (12), wherein the covering plate (12) is coupled with the inner surface (101) of the main body (10).

## Patentansprüche

1. Schutzgehäuse, umfassend:
einen Hauptkörper (10), wobei eine elektronische Vorrichtung (13) an dem Hauptkörper (10) installiert wird; und
ein Befestigungsband (11), das an dem Hauptkörper (10) zum Halten eines Gegenstands zwischen dem Befestigungsband (11) und dem Hauptkörper (10) angeordnet ist,
wobei das Befestigungsband (11) umfasst:
einen ersten elastischen Teil (111), der mit einer Innenoberfläche (101) des Hauptkörpers (10) verbunden ist und mindestens eine erste Öffnung (114) umfasst, wobei eine elastische Kraft des ersten elastischen Teils (111) durch die mindestens eine erste Öffnung (114) einstellbar ist;
einen zweiten elastischen Teil (112), der mit der Innenoberfläche (101) des Hauptkörpers (10) verbunden ist und mindestens eine zweite Öffnung (115) umfasst, wobei eine elastische Kraft des zweiten elastischen Teils (112) durch die mindestens eine zweite Öffnung (115) einstellbar ist; und
einen Verbindungsteil (113), der zwischen dem ersten elastischen Teil (111) und dem zweiten elastischen Teil (112) angeordnet ist und mit dem ersten elastischen Teil (111) und dem zweiten elastischen Teil (112) verbunden ist,
wobei, wenn der Verbindungsteil (113) nicht gezogen wird, der Verbindungsteil (113) innerhalb eines hohlen Abschnitts (106) des Hauptkörpers (10) aufgenommen ist und zu einer Außenoberfläche (109) des Hauptkörpers (10) freiliegt, und der Verbindungsteil (113) koplanar mit der Außenoberfläche (109) des Hauptkörpers (10) ist,
wobei, wenn der Verbindungsteil (113) gezogen wird, der erste elastische Teil (111) und der zweite elastische Teil (112) gestreckt werden und einer Verformung unterzogen werden, so dass der Gegenstand zwischen dem Verbindungsteil (113) und dem Hauptkörper (10) gehalten wird,
**dadurch gekennzeichnet, dass** der Hauptkörper (10) ferner eine Anschlagplatte (107) unter dem hohlen Abschnitt (106) umfasst, wobei zwei parallele Ränder der Anschlagplatte (107) mit zwei entsprechenden parallelen Rändern des hohlen Abschnitts (106) verbunden sind und sich zwei Verbindungslöcher (108) jeweils an zwei gegenüberliegenden Seiten der Anschlagplatte (107) befinden.

2. Schutzgehäuse nach Anspruch 1, **dadurch gekennzeichnet, dass** die mindestens eine erste Öffnung (114) und die mindestens eine zweite Öffnung (115) dieselbe Anzahl und dieselbe Form aufweisen.

3. Schutzgehäuse nach Anspruch 1, **dadurch gekennzeichnet, dass** die mindestens eine erste Öffnung (114) und die mindestens eine zweite Öffnung (115) kreisförmig oder länglich sind.

4. Schutzgehäuse nach Anspruch 1, **dadurch gekennzeichnet, dass** der Verbindungsteil (113) aus einem nicht-elastischen Material hergestellt ist und der erste elastische Teil (111) und der zweite elastische Teil (112) aus einem Silikonharz hergestellt sind.

5. Schutzgehäuse nach einem der vorhergehenden Ansprüche, **dadurch gekennzeichnet, dass** der erste elastische Teil (111) und der zweite elastische Teil (112) durch die entsprechenden Verbindungslöcher (108) in den Hauptkörper (10) eingeführt werden.

6. Schutzgehäuse nach Anspruch 1, **dadurch gekennzeichnet, dass** der Hauptkörper (10) ferner mindestens einen ersten Verriegelungsschlitz (103, 1031) umfasst und der erste elastische Teil (111) mindestens eine erste Vorwölbung (119, 1191) umfasst, wobei sich der mindestens eine erste Verriegelungsschlitz (103, 1031) an einer ersten lateralen Seite (102) der Innenoberfläche (101) des Hauptkörpers (10) befindet, und die mindestens eine erste Vorwölbung (119, 1191) in dem mindestens einen ersten Verriegelungsschlitz (103, 1031) verriegelt wird und an der ersten lateralen Seite (102) des Hauptkörpers (10) angebracht wird.

7. Schutzgehäuse nach Anspruch 1, **dadurch gekennzeichnet, dass** der Hauptkörper (10) ferner mindestens einen zweiten Verriegelungsschlitz (105, 1051) umfasst und der zweite elastische Teil (112) mindestens eine zweite Vorwölbung (121, 1211) umfasst, wobei sich der mindestens eine zweite Verriegelungsschlitz (105, 1051) an einer zweiten lateralen Seite (104) der Innenoberfläche (101) des Hauptkörpers (10) befindet, und die mindestens eine zweite Vorwölbung (121, 1211) in dem mindestens einen zweiten Verriegelungsschlitz (105, 1051) verriegelt wird und an der zweiten lateralen Seite (104) des Hauptkörpers (10) angebracht wird.

8. Schutzgehäuse nach Anspruch 1, **dadurch gekennzeichnet, dass** der Verbindungsteil (113) mindestens eine erste Verbindungsrille (116, 1161) umfasst und der erste elastische Teil (111) mindestens einen ersten Verbindungsblock (118, 1181) umfasst, der in der ersten Verbindungsrille (116, 1161) verriegelt wird.

9. Schutzgehäuse nach Anspruch 1, **dadurch gekennzeichnet, dass** der Verbindungsteil (113) mindestens eine zweite Verbindungsrille (117, 1171) umfasst und der zweite elastische Teil (112) mindestens einen zweiten Verbindungsblock (120, 1201) umfasst, der in der zweiten Verbindungsrille (117, 1171) verriegelt wird.

10. Schutzgehäuse nach Anspruch 1, **dadurch gekennzeichnet, dass** zwei Enden des ersten elastischen Teils (111) und zwei Enden des zweiten elastischen Teils (112) an dem Verbindungsteil (113) und der Innenoberfläche (101) des Hauptkörpers (10) mit einem Haftmittel angebracht sind.

11. Schutzgehäuse nach Anspruch 1, **dadurch gekennzeichnet, dass** es ferner eine Abdeckplatte (12) umfasst, wobei die Abdeckplatte (12) mit der Innenoberfläche (101) des Hauptkörpers (10) gekoppelt ist.

## Revendications

1. Boîtier de protection, comprenant :
un corps principal (10) dans lequel un dispositif électronique (13) est installé sur le corps principal (10) ; et
une bande de fixation (11) disposée sur le corps principal (10) pour maintenir un objet entre la bande de fixation (11) et le corps principal (10),
ladite bande de fixation (11) comprenant :
une première partie élastique (111) connectée à une surface intérieure (101) du corps principal (10), et comprenant au moins une première ouverture (114), dans lequel une force élastique de la première partie élastique (111) est ajustable au moyen de ladite au moins une première ouverture (114) ;
une deuxième partie élastique (112) connectée à la surface intérieure (101) du corps principal (10), et comprenant au moins une deuxième ouverture (115), dans lequel une force élastique de la deuxième partie élastique (112) est ajustable au moyen de ladite au moins une deuxième ouverture (115) ; et
une partie de connexion (113) agencée entre la première partie élastique (111) et la deuxième partie élastique (112) et connectée à la première partie élastique (111) et à la deuxième partie élastique (112),
dans lequel, quand la partie de connexion (113) n'est pas tirée, la partie de connexion (113) est installée à l'intérieur d'une portion creuse (106) du corps principal (10) et est exposée vers une surface extérieure (109) du corps principal (10), et la partie de connexion (113) est coplanaire avec la surface extérieure (109) du corps principal (10),
dans lequel, quand la partie de connexion (113) est tirée, la première partie élastique (111) et la deuxième partie élastique (112) sont étirées et soumises à une déformation, de sorte que l'objet est maintenu entre la partie de connexion (113) et le corps principal (10),
**caractérisé en ce que** le corps principal (10) comprend en outre une plaque d'arrêt (107) sous la portion creuse (106), dans lequel deux bords parallèles de la plaque d'arrêt (107) sont connectés à deux bords parallèles correspondants de la partie creuse (106), et deux trous de connexion (108) sont respectivement situés au niveau de deux côtés opposés de la plaque d'arrêt (107).

2. Boîtier de protection selon la revendication 1, **caractérisé en ce que** ladite au moins une première ouverture (114) et ladite au moins une deuxième ouverture (115) sont prévues de même nombre et ont la même forme.

3. Boîtier de protection selon la revendication 1, **caractérisé en ce que** ladite au moins une première ouverture (114) et ladite au moins une deuxième ouverture (115) sont circulaires ou oblongues.

4. Boîtier de protection selon la revendication 1, **caractérisé en ce que** la partie de connexion (113) est faite à partir d'un matériau non élastique, et la première partie élastique (111) et la deuxième partie élastique (112) sont faites à partir d'une résine de silicone.

5. Boîtier de protection selon l'une quelconque des revendications précédentes, **caractérisé en ce que** la première partie élastique (111) et la deuxième partie élastique (112) sont introduites jusque dans le corps principal (10) au moyen des trous de connexion correspondants (108).

6. Boîtier de protection selon la revendication 1, **caractérisé en ce que** le corps principal (10) comprend en outre au moins une première fente de verrouillage (103, 1031), et la première partie élastique (111) comprend au moins une première protubérance (119, 1191), dans lequel ladite au moins une première fente de verrouillage (103, 1031) est située au niveau d'un premier côté latéral (102) de la surface intérieure (101) du corps principal (10), et ladite au moins une première protubérance (119, 1191) est verrouillée jusque dans ladite au moins une première fente de verrouillage (103, 1031) et est fixée au niveau du premier côté latéral (102) du corps principal (10).

7. Boîtier de protection selon la revendication 1, **caractérisé en ce que** le corps principal (10) comprend en outre au moins une deuxième fente de verrouillage (105, 1051), et la deuxième partie élastique (112) comprend au moins une deuxième protubérance (121, 1211), dans lequel ladite au moins une deuxième fente de verrouillage (105, 1051) est située au niveau d'un deuxième côté latéral (104) de la surface intérieure (101) du corps principal (10), et ladite au moins une deuxième protubérance (121, 1211) est verrouillée jusque dans ladite au moins une deuxième fente de verrouillage (105, 1051) et est fixée au niveau du deuxième côté latéral (104) du corps principal (10).

8. Boîtier de protection selon la revendication 1, **caractérisé en ce que** la partie de connexion (113) comprend au moins une première rainure de connexion (116, 1161), et la première partie élastique (111) comprend au moins un premier bloc de connexion (118, 1181) verrouillé jusque dans ladite au moins une première rainure de connexion (116, 1161).

9. Boîtier de protection selon la revendication 1, **caractérisé en ce que** la partie de connexion (113) comprend au moins une deuxième rainure de connexion (117, 1171), et la deuxième partie élastique (112) comprend au moins un deuxième bloc de connexion (120, 1201) verrouillé jusque dans ladite au moins une deuxième rainure de connexion (117, 1171).

10. Boîtier de connexion selon la revendication 1, **caractérisé en ce que** deux extrémités de la première partie élastique (111) et deux extrémités de la deuxième partie élastique (112) sont attachées sur la partie de connexion (113) et sur la surface intérieure (101) du corps principal (10) via un adhésif.

11. Boîtier de protection selon la revendication 1, **caractérisé en ce qu'**il comprend en outre une plaque de couverture (12), dans lequel la plaque de couverture (12) est couplée à la surface intérieure (101) du corps principal (10).
